# EUROPEAN PATENT SPECIFICATION

(11) **EP 0 839 684 B1**
(45) Date of publication and mention of the grant of the patent: **11.09.2002**
(21) Application number: 97119159.8
(22) Date of filing: 03.11.1997
(51) Int. Cl.: B60K 41/24

(54) **A system for controlling parking and hill-starting of a motor-vehicle**
System zur Steuerung des Parkens und des Anfahrens eines Kraftfahrzeuges am Berg
Système pour commander le stationnement et le démarrage en pente d'un véhicule à moteur

(30) Priority: 05.11.1996 IT TO960891
(43) Date of publication of application: 06.05.1998
(73) Proprietor: MAGNETI MARELLI POWERTRAIN S.p.A., 10138 Torino (IT)
(72) Inventor: Seminara, Massimo, 28100 Novara (IT)
(74) Representative: Quinterno, Giuseppe

(56) References cited:
- EP-A- 0 131 411
- EP-A- 0 375 162
- EP-A- 0 379 329
- US-A- 5 137 127

## Description

The present invention relates to a control system according to the preamble of Claim 1, for controlling the parking and hill-starting of a vehicle driven by an internal combustion engine.

When a motor-vehicle is stationary with the engine running on an uphill section of road and is to be driven away, the motor vehicle has to change from the parked condition, which is maintained by the application of the brakes, to an incipient movement condition. With conventional motor-vehicles, this transition can be carried out "manually" in various ways, usually with the use of the parking/emergency brake or by means of a rapid operation of the brake and accelerator pedals in order to reduce the amount of rearward movement of the motor vehicle.

Both of these operations are hazardous. In the first case the clutch is overloaded and in the second case, in addition to the overloading of the clutch, there is a risk of loss of control of the motor-vehicle.

EP-A-0 131 411 discloses a system of the initially defined kind for a motor-vehicle equipped with an automatic transmission, however this prior control system includes a single electronic unit adapted to control the brakes, the clutch and the gear shift.

The object of the present invention is to provide an easy-to-produce and low cost system of the above-defined kind which can facilitate the driving-away on a sloping road of motor-vehicles of the type with a servo-assisted clutch system comprising a friction clutch and referred to below by the initials ACS, and hence without the normal clutch-control pedal, and also having an ABS anti-slip braking system which may be incorporated in an electronic traction-control system, referred to below as the ASR.

This and other objects are achieved, according to the invention, by a system the principal characteristics of which are defined in appended Claim 1.

Further characteristics and advantages of the invention will become clear from the following detailed description given purely by way of non-limiting example, with reference to the appended drawings, in which:
Figure 1 is a partial view of a motor-vehicle having a system according to the invention, shown in the form of a block diagram, and
Figure 2 is a diagram of the states of a system according to the invention.

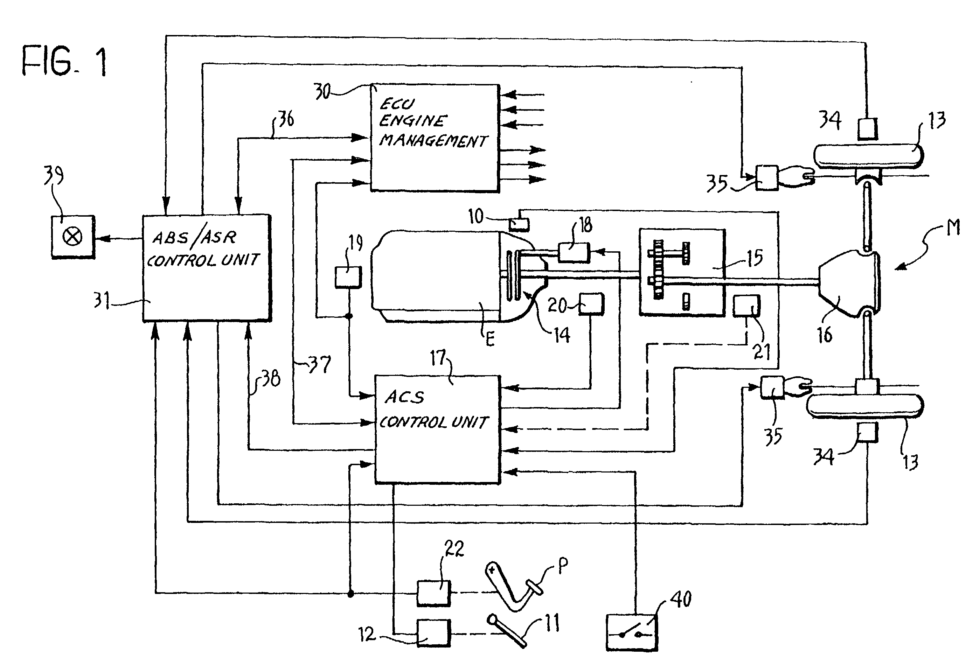

Figure 1 shows partially a motor-vehicle M with an internal combustion engine E. An accelerator pedal 11, to which an electrical position sensor 12 is connected, is associated with the engine in known manner.

The engine E can be coupled to at least one pair of driving wheels 13 of the motor-vehicle by means of a transmission and a friction clutch 14. The transmission comprises a gearbox 15 and a differential 16.

The clutch 14 forms part of a servo-assisted clutch system (ACS) comprising an electronic control unit 17 arranged to pilot the clutch by means of an actuator 18 in dependence on the data/signals which the unit receives from a plurality of sensors.

In particular, a sensor 19 for supplying electrical signals indicative of the rate of rotation of the shaft of the engine E, a sensor 20 which provides signals indicative of the rate of rotation at the input to the gearbox 15, and a position sensor 10 associated with the clutch 14, are connected to the control unit 17.

A sensor 21 which provides a signal proportional to the speed of the vehicle is usually connected to the control unit 17; the signal of the sensor 21 is not used if this information can reach the unit 17 from the control unit 31.

A sensor 22 for detecting the activation of the braking system of the motor-vehicle such as, for example, a position sensor associated with the brake pedal P, and the position sensor 12 associated with the accelerator pedal 11, are also connected to the control unit 17.

The electronic control unit for controlling the operation of the engine E is indicated 30 in the drawing. This unit is arranged, in known manner, to control ignition and fuel-injection.

The sensor 19 as well as other sensors, not shown, such as engine-temperature sensors, sensors for detecting the voltage delivered by the vehicle's battery, etc., are connected to the unit 30.

The motor-vehicle M shown partially in Figure 1 also has an antilock braking system ABS, advantageously integrated with a traction-control system ASR.

The ABS/ASR system comprises an electronic control unit 31 to which the sensor 22, as well as further sensors 34 which detect the rate of rotation of the driving wheels 13, are connected, in particular.

The control unit 31 is also arranged for piloting brake-actuating devices 35 associated with the wheels and for dialogue with the control unit 30 by means of a communication line indicated 36.

The control unit 17 is also arranged for dialogue with the control units 30 and 31 by means of the communication lines indicated 37 and 38.

As will become clearer from the following, as well as performing their respective functions in known manner, the traction- and clutch-control systems of the motor-vehicle are integrated with one another and are advantageously arranged to perform an additional function of controlling parking of the vehicle on a hill, particularly an upward slope, with the engine running, and driving-away of the vehicle from such a parking condition.

The communication line 38 between the control units 17 and 31 is provided precisely in order to perform this additional function. Moreover, an indicator or warning device 39, advantageously arranged, for example, on the dashboard of the motor-vehicle, is advantageously connected to the control unit 31.

A manually-operated control device connected to the control unit 17 is advantageously provided for the switching on/off of the motor-vehicle parking and driving-away control function.

This device may be constituted simply by a switch, for example, a push-button or a lever.

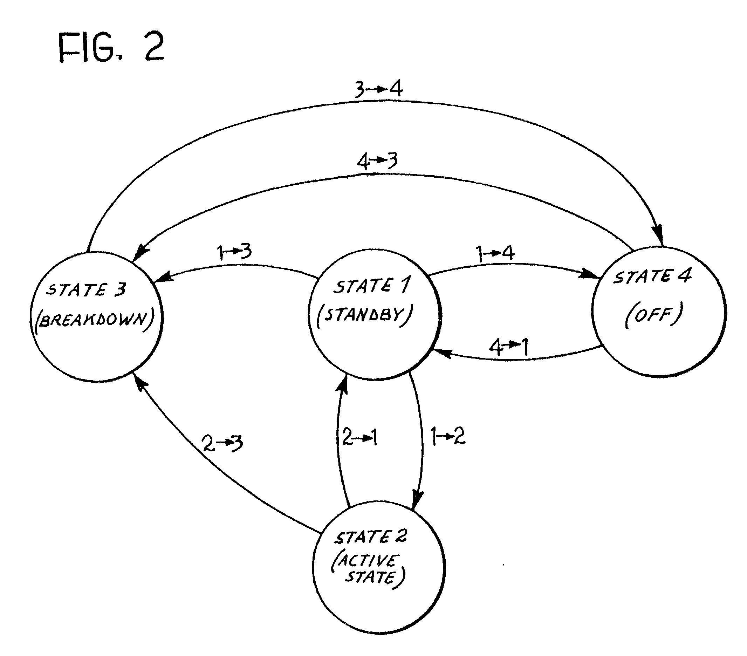

Further characteristics and the method of operation of the system according to the invention will become clearer from the following description of the possible states of the system and of the changes between these states, given with reference to Figure 2 of the drawings.

The system described above is arranged to adopt the following four possible states:
- standby state (state 1),
- active state (state 2).
- breakdown state (state 3), and
- operation-excluded state (state 4).

In state 1 (standby), the traction-control system controlled by the unit 31 performs its own normal functions, checks the availability of active braking and the functional state of the transmission channels 38. The clutch-control system 17 also performs its own normal function, and also transmits data relating to its state of operation to the control unit 31 by means of the channel 38 and analyses the signals of the associated sensors and the states of the communication lines.

When it is in state 1, the system can change to state 4 (operation excluded) if the user requests, by means of the switch 40, disablement of the function for controlling parking with the engine running and driving-away of the vehicle. In this case, the control unit 17 detects the switching of the switch 40, sends a corresponding state datum to the control unit 31 by means of the communication channel 38 and the unit 31 detects the request for a change of state.

When the whole system is in state 1, it can change to state 2 (active state): this condition occurs when the unit 17 detects that, whilst the clutch 14 is disengaged, the driver has operated the brake pedal P or the vehicle has stopped, the latter condition being detectable, for example, when the signal supplied by the sensor 21 indicates a rate of rotation below a predetermined threshold. When these conditions occur, the unit 17 changes from state 1 to state 2, supplying a corresponding datum to the control unit 31 by means of the line 38. Upon receipt of this datum, the control unit 31 checks that the vehicle M is stationary by detecting the states of the braking actuators 35 associated with the wheels and then changes from state 1 to state 2.

In state 2 (active state), the control unit 31 checks the availability of the braking system as well as the availability of the communication channel 38 and activates the braking actuators 35 with the braking pressure value necessary to keep the vehicle stationary. The control unit 17 performs its own normal functions, sends signals indicative of its own state on the line 38 and analyzes the signals supplied to it by the sensors and devices to which it is connected.

When the unit 17 detects, by means of the signal supplied by the sensor 12 and by the sensor 19 (rate of rotation of the engine), that the driver has depressed the accelerator pedal in order to request the vehicle to drive away again, the unit 17 brings about modulated re-engagement of the clutch 14. As soon as the clutch 14 is engaged to a certain predetermined extent, the unit 17 sends a corresponding signal to the control unit 31 by means of the line 38. The latter unit then enables the system to change to state 1.

State 3 is a breakdown state of the system. The system is in this state when the control unit 17 or the control unit 31 detects an anomalous set of signals. When the system is in state 3, the control unit 31 switches on the indicator device 39 to supply an acoustic or optical warning signal. When the causes of the anomaly in the set of signals are removed, the system automatically changes from state 3 to the switched-off state, that is, state 4.

The system is arranged to change to state 3 from any one of the other states.

It is clear from the foregoing that the function of controlling parking of the vehicle with the engine running and driving away again from such a parking condition can be achieved according to the invention with a small amount of additional hardware represented essentially by the communication line 38, the indicator 39 (if this is not already provided for the traction-control system) and by the on/off switch 40. Apart from this additional hardware, the implementation of the function described above presupposes simply a suitable arrangement, at the software level, of the electronic units which supervise the operation of the ABS/ASR system and of the ACS system.

The system according to the invention also enables an intrinsic safety function to be performed in the event of a breakdown of the clutch-control system, since it can be arranged to maintain braking of the motor-vehicle in this case, if the clutch is accidentally re-engaged.

Naturally, the principle of the invention remaining the same, the forms of embodiment and details of construction may be varied widely with respect to those described and illustrated purely by way of non-limiting example, without thereby departing from the scope of the present invention as defined in the annexed Claims.

## Claims

1. A system for controlling parking with the engine running and hill-starting of a motor-vehicle with an internal combustion engine (E) which is operated by an accelerator pedal (11) and can be coupled to at least one pair of driving wheels (13) by means of a transmission (15, 16) with a servo-assisted friction clutch system (14; 17);
the servo-assisted clutch system comprising a clutch (14) associated with a position sensor (10) and a coupling-control device (18) piloted by an electronic control unit (17) on the basis of signals indicative of the rate of rotation of the shaft of the engine (E) and of the input and output shafts of the transmission (15), the position of the brake pedal (P), and the position of the accelerator pedal (11); said electronic control unit (17) being arranged to provide
- a first enabling signal when, whilst the clutch (14) is disengaged and the engine (E) is running, the signals of the sensors (22, 21) indicate that the brake (P) has been operated or that the speed of the vehicle (M) is below a predetermined threshold, and
- a second enabling signal when, after the signals of the sensors (12, 10) indicate that the driver has operated the accelerator pedal, the clutch (14) has been at least partially engaged,
in order to activate and de-activate braking actuators (35), respectively, so as to allow to park the vehicle and to enable the vehicle (M) to drive away again, respectively;
the system being **characterized in that**
an ABS/ASR braking- and traction-control system (31-35) is associated with the two driving wheels (13) and comprises an electronic control unit (31) adapted to control the braking actuators (35) associated at least with the driving wheels (13) on the basis of signals indicative of the rate of rotation of the wheels (13) and of the position of the brake pedal (P),
- the electronic control unit (17) of the servo-assisted clutch system is connected to the control unit (31) of the braking- and traction-control system by means of a two-way communication line (38), and is arranged to send to the control unit (31) of the braking- and traction-control system, by means of said communication line (38), said first and second enabling signals; and **in that**
- the control unit (31) of the braking- and traction control system is arranged to activate and de-activate the braking actuators (35) upon receiving the first and the second enabling signal, respectively.

2. A control system according to Claim 1, **characterized in that**, in the event of a breakdown of the clutch control system, the control unit (17) is arranged to control the braking- and traction-control unit (31) in dependence on the signals received from the sensors (10, 19, 20) so as to maintain braking of the vehicle when the clutch is re-engaged.

## Patentansprüche

1. System zur Steuerung des Abstellens bei laufendem Motor und zum Berganfahren eines Kraftfahrzeugs mit einem Verbrennungsmotor (E), der mit einem Gaspedal (11) betätigt wird und mit zumindest einem Paar von Antriebsrädern (13) über eine Kraftübertragung (15, 16) mit einem servounterstützten Reibungskupplungs-System (14; 17) gekuppelt werden kann;
wobei das servounterstützte Kupplungssystem eine Kupplung (14) enthält, der ein Stellungsfühler (10) und eine Kupplungs-Steuereinrichtung (18) zugeordnet sind, die von einer elektronischen Steuereinheit (17) aufgrund von Signalen gesteuert wird, mit denen die Drehzahl der Welle des Motors (E) sowie der Antriebswelle als auch der Abtriebswelle der Kraftübertragung (15), die Stellung des Bremspedals (P) und die Stellung des Gaspedals (11) angegeben werden; wobei die elektronische Steuereinheit (17) so aufgebaut ist, dass sie liefert;
- ein erstes Einschaltsignal, wenn bei ausgerückter Kupplung (14) und laufendem Motor (E) die Signale der Fühler (22, 21) anzeigen, dass die Bremse (P) betätigt wurde, oder dass die Geschwindigkeit des Fahrzeugs (M) unterhalb eines vorgegebenen Schwellenwerts liegt, und
- ein zweites Einschaltsignal, wenn, nachdem die Signale der Fühler (12, 10) anzeigen, dass der Lenker das Gaspedal betätigt hat, die Kupplung (14) zumindest teilweise eingerückt wurde,
um die Bremsen-Stellglieder (35) in Betrieb bzw. außer Betrieb zu setzen, um das Fahrzeug abstellen zu können bzw. mit dem Fahrzeug (M) wieder anfahren zu können;
wobei das System **dadurch gekennzeichnet ist, dass**
ein ABS/ASR-Brems- und Traktions-steuersystem (31-35) den beiden Antriebsrädern (13) zugeordnet ist, wobei es eine elektronische Steuereinheit (31) besitzt, die so aufgebaut ist, um die Bremsen-Stellglieder (35), die zumindest den Antriebsrädern (13) zugeordnet sind, aufgrund von Signalen zu steuern, mit denen die Drehzahl der Räder (13) sowie die Stellung des Bremspedals (P) angegeben wird,
- wobei die elektronische Steuereinheit (17) des servounterstützten Kupplungssystems mit der Steuereinheit (31) des Bremsen- und Traktions-Steuersystems über eine Zweiweg-Kommunikationsleitung (38) verbunden und so aufgebaut ist, um zur Steuereinheit (31) des Bremsen- und Traktions-Steuersystems über die Kommunikationsleitung (38) das erste und das zweite Einschaltsignal zu senden;
- wobei die Steuereinheit (31) des Bremsen- und Traktions-Steuersystems so aufgebaut ist, um die Bremsen-Stellglieder (35) beim Empfang des ersten bzw. des zweiten Einschaltsignals in Betrieb bzw. außer Betrieb zu setzen.

2. Steuersystem gemäß Anspruch 1, **dadurch gekennzeichnet, dass** die Steuereinheit (17) bei einer Störung des Kupplungs-Steuersystems so aufgebaut ist, dass sie die Bremsen- und Traktions-Steuereinheit (31) in Abhängigkeit von jenen Signalen steuert, die von den Fühlern (10, 19, 20) empfangen werden, um das Fahrzeug weiter zu bremsen, wenn die Kupplung wieder eingerückt wird.

## Revendications

1. Système pour commander le stationnement alors que le moteur est en fonctionnement et le démarrage en pente d'un véhicule automobile muni d'un moteur à combustion (E), actionné par une pédale d'accélérateur (11) et pouvant être couplé à au moins une paire de roues d'entraînement (13) à l'aide d'une transmission (15, 16) munie d'un système d'embrayage à friction (14 ; 17) à servo-assistance;
le système d'embrayage à servo-assistance comprenant un embrayage (14) associé à un capteur de position (10) et un dispositif de commande d'accouplement (18) piloté par une unité de commande électronique (17) sur la base de signaux indicatifs de la vitesse de rotation de l'arbre du moteur (E) et des arbres d'entrée et de sortie de la transmission (15), la position de la pédale de frein (P), et la position de la pédale d'accélérateur (11); ladite unité de commande électronique (17) étant agencée pour fournir:
- un premier signal d'autorisation lorsque, alors que l'embrayage (14) est débrayé et que le moteur (E) fonctionne, les signaux des capteurs (22, 21) indiquent que le frein (P) a été actionné ou que la vitesse du véhicule (M) est inférieure à un seuil prédéterminé, et
- un deuxième signal d'autorisation lorsque, après que les signaux venant des capteurs (12, 10) indiquent que le pilote a actionné la pédale d'accélérateur, l'embrayage (14) a été au moins partiellement embrayé,
afin d'activer et de désactiver des actionneurs de freinage (35), respectivement, pour permettre d'immobiliser le véhicule en stationnement et pour permettre au véhicule (M) de partir de nouveau, respectivement;
le système étant **caractérisé en ce qu'** un système de commande freinage et de traction ABS/ASR (31 à 35) est associé aux deux roues d'entraînement (13) et comprend une unité de commande électronique (31) adaptée pour commander les actionneurs de freinage (35) associés au moins aux roues d'entraînement (13), sur la base de signaux indicatifs de la vitesse de rotation des roues (13) et de la position de la pédale de frein (P),
- l'unité de commande électronique (17) du système d'embrayage à servo-assistance est reliée à l'unité de commande (31) du système de commande de freinage et de traction à l'aide d'une ligne de communication bidirectionnelle (38), et agencée pour envoyer à l'unité de commande (31) du système de commande de freinage et de traction, au moyen de ladite ligne de communication (38), lesdits premier et deuxième signaux d'autorisation ; et **en ce que**:
- l'unité de commande (31) du système de commande de freinage et de traction est agencée pour activer et désactiver les actionneurs de freinage (35) lors de la réception des premier et deuxième signaux d'autorisation, respectivement.

2. Système de commande selon la revendication 1, **caractérisé en ce que**, dans l'éventualité d'une panne du système de commande d'embrayage, l'unité de commande (17) est agencée pour commander l'unité de commande de freinage et de traction (31) en fonction des signaux reçus des capteurs (10, 19, 20), pour maintenir le freinage du véhicule lorsque l'embrayage est de nouveau embrayé.
